# EUROPÄISCHE PATENTSCHRIFT

(11) **EP 1 875 189 B1**
(45) Veröffentlichungstag und Bekanntmachung des Hinweises auf die Patenterteilung: **13.06.2012**
(21) Anmeldenummer: 06753412.3
(22) Anmeldetag: 25.04.2006
(51) Int. Cl.: G01M 3/16

(54) **Leckprüf- und Leckortungsanordnung zur Leckprüfung und Leckortung von Flachdächern oder dergleichen**
Leak testing and leak localization arrangement for leak testing and leak localization for flat roofs or the like
Dispositif de détection et de localisation de fuites pour des toits plats ou analogues

(30) Priorität: 29.04.2005 DE 202005006827 U
(43) Veröffentlichungstag der Anmeldung: 09.01.2008
(73) Patentinhaber: Lorenz, Bernd, 63773 Goldbach (DE); Brühl, Markus, 63773 Goldbach (DE); Burger, Klaus, 63773 Goldbach (DE)
(72) Erfinder: Lorenz, Bernd, 63773 Goldbach (DE); Brühl, Markus, 63773 Goldbach (DE); Burger, Klaus, 63773 Goldbach (DE)
(74) Vertreter: Schubert, Siegmar
(86) Internationale Anmeldenummer: PCT/EP2006/003815
(87) Internationale Veröffentlichungsnummer: WO 2006/117100

(56) Entgegenhaltungen:
- WO-A-00/01895
- DE-A1- 3 701 130
- DE-A1- 10 036 362
- DE-A1- 19 914 658
- GB-A- 2 373 057
- US-A- 4 404 516
- US-A- 4 565 965

## Beschreibung

Die Erfindung betrifft ein Verfahren zur Leckprüfung und Leckortung von Flachdächern oder dergleichen nach dem Oberbegriff des Anspruchs 1. Ein weiterer Aspekt der Erfindung betrifft eine zur Ausübung dieses Verfahrens geeignete Anordnung.

Es geht somit auch um die Leckprüfung bzw. Dichtigkeitsprüfung und Leckortung von flach geneigten Dächern, Tiefgaragen, Parkdecks, Teichen, Deponien

Zu einer derartigen bekannten Anordnung, die zur Ausübung eines Verfahrens zum Orten von Leckstellen in Flachdächern verwendet wird, gehört als Spannungsquelle ein Gleichstromimpulse erzeugender Generator, dessen Pluspol mit der unter einem Flachdach erkannten Feuchtstelle verbunden ist und dessen Minuspol mit der metallischen Traufkante des Flachdaches oder einem auf dem Flachdach ausgelegten blanken Kabel in Verbindung steht (EP 0 125 460 B1). Das in der Anordnung untersuchte Flachdach hat typisch als Dachhaut Dachpappe, die in mehreren Lagen bzw. Bahnen übereinander und nebeneinander geklebt wird. Zu der Anordnung gehört weiter ein Messgerät, welches die über zwei Messfühler zur Abtastung des Daches dem Messgerät zugeführten Impulsamplituden miteinander vergleicht und die größere Impulsamplitude über ein mit einer Mittenanzeige ausgerüstetes Zeigeranzeigeinstrument anzeigt. - Das mit dieser Anordnung durchgeführte Verfahren setzt also voraus, dass eine Feuchtstelle unter dem Flachdach gebildet ist, nachdem Feuchtigkeit durch das Flachdach vollständig hindurchgedrungen ist, also beispielsweise auch durch eine unter einer Dachabdichtung angeordneten Dämmung, Dampfsperre und Betondecke hindurch. Das Verfahren setzt ferner voraus, dass eine damit gebildete Feuchtstelle erkannt wird und ein Pol der Spannungsquelle, der Pluspol, mit der Feuchtstelle verbunden wird, was umständlich ist und eine unter Umstanden ansonsten unnötige Beschädigung der Feuchtstelle hervorrufen kann. Außerdem kann es eine Sanierung eines solchen schadhaften Flachdachs erfordern, dass dessen tiefer gelegene Schichten unter einer oberen Dichtbahn repariert werden.

Im wesentlichen die gleichen Nachteile hat eine Anordnung zur Ausübung eines Verfahrens zur Leckortung von Undichtigkeitsstellen auf Flachdächern oder dergleichen, bei dem zwischen der Unterseite und der Oberseite des Flachdaches eine Wechselspannung einer Wechselspannungsquelle angelegt wird, wozu auf der Oberseite ein Abtastleiter in Form eines Messstabes vorgesehen ist, mit dem die Oberfläche des Flachdaches punktweise abgetastet wird (EP 1 052 491 A1). Je näher sich der Abtastleiter an der Undichtigkeitsstelle befindet, um so größer wird ein Messsignal, welches einem Kopfhörer aufgegeben wird.

Zum Stand der Technik gehört weiterhin eine Anordnung zur Leckagedetektion und Leckortung von elektrisch zumindest gering leitenden liquiden Leckagefluiden an elektrisch nicht leitenden Abdichtungssystemen, wobei das Abdichtungssystem aus einer elektrisch isoliert zwischen zwei nicht leitenden Schichten und einer gegenüber dem Fluid abgedichteten elektrischen Widerstandsschicht besteht, und wobei das Fluid zumindest hochohmig geerdet ist (DE 199 14 658 C2). An die elektrische Widerstandsschicht sind mehrfach elektrische Anschlussleiter angeschlossen, die mit einer geerdeten elektrischen Spannungsquelle verbunden sind. In die Anschlussleiter ist jeweils ein Strommessgerät eingeschaltet, mit denen ein Leckagestrom gemessen werden kann. Weiterhin wird über das Verhältnis der erfassten Ströme in den einzelnen Anschlussleitern ein Leck geortet. Die Widerstandsschicht kann randseitig von einer Schirmelektrode in Form eines elektrischen Leiters umgeben sein, die auf das gleiche elektrische Potential wie die Widerstandsschicht gelegt ist. - Diese Anordnung verwendet also eine relativ aufwendige elektrische Widerstandsschicht, die mindestens näherungsweise konstanten Flächenwiderstand aufweisen soll. Die Auswertung der durch die Anschlussleiter fließenden Leckageströme ist kompliziert, insbesondere wenn mit vielen Anschlussleitem ein Leck genau geortet werden soll.

Bekannt ist es zwar auch (Absatz [0003] in obiger DE 199 14 658 C2), in Leckprüfsystemen mindestens zwei Sensorleitungen, die im störungsfreien Fall nicht miteinander verbunden sind, durch den Eintritt der elektrisch leitenden Flüssigkeit zu überbrücken und damit einen Alarm auszulösen, indem insbesondere elektrische Widerstände zwischen Leitungsbändern an den flächenhaften Abdichtungen detektiert werden. - Damit ist aber nur eine Leckerkennung, nicht aber eine Leckortung möglich.

US 4 565 965 offenbart ein Verfahren und eine entsprechende Vorrichtung zur Ortung von Undichtigkeiten in Flachdächern.

Der vorliegenden Erfindung liegt somit die Aufgabe zugrunde, ein Verfahren zur Leckprüfung- und Leckortung zu schaffen, das eine unkomplizierte Leckprüfung und Leckortung gestattet, bei der die Leckortung gleichwohl genau ist, und zu dem keine Feuchtstelle eines von Wasser durchdrungenen Flachdachs einschließlich dessen Abdichtung und Dämmsystem vorauszusetzen ist.

Diese Aufgabe wird mit einem Verfahren zur Leckprüfung- und Leckortung gelöst, welche die Merkmale des Anspruchs 1 aufweist.

Demgemäß geht das Verfahren von der Verwendung auf der Unterseite der Dichtbahn, die somit tiefer als deren Oberseite liegt, aber über einer Betondecke des Flachdachs (oder Trapezblech oder Holzunterkonstruktion) und ggf. einer Dampfsperre und -dämmung liegt, angeordneten bahnförmigen elektrisch leitfähigen Materials aus. Die mit elektrisch leitfähigem Material ausgestattete Bahn, also die Bahn aus elektrisch leitfähigem Material, ist eine Metallgitterbahn, die leicht verlegt werden kann, nicht brennbar ist und nach Installation in der elektrischen Schaltungsanordnung eine zuverlässige Leckprüfung und genügend genaue Leckortung ermöglicht.

Hierzu wird eine Spannungsquelle verwendet, die mit einem Pol an die Oberseite der Dichtbahn angelegt wird. Die Bahn aus elektrisch leitfähigem Material, nämlich die Metallgitterbahn, wird an einem anderen Pol der Spannungsquelle angeschlossen.

Die Bahn aus elektrisch leitfähigem Material kann mit wenigstens einer Kontaktplatte kontaktiert sein, die an einer Stelle des Randes dieser Bahn fest angebracht ist. Diese Kontaktplatte oder deren Zuleitung ist vorzugsweise durch die auf der Oberseite des Flachdachs aufgebrachte Dichtbahn elektrisch isoliert durchgeführt. Die Bahn aus elektrisch leitfähigem Material ist also in unmittelbarer Nähe der oberen isolierenden Dichtbahn angeordnet und von dieser ggf. nur durch ein Trennvlies getrennt.

Der Pol der Spannungsquelle, der an die Oberseite der Dichtbahn angelegt wird, kann an eine Ringleitung, die auf der Dichtbahn an deren Rand angeordnet ist, angeschlossen werden, siehe Anspruch 3, oder aber bevorzugt nach Anspruch 2 an wenigstens einer mobilen Dichtbahn-Kontaktplatte, die auf die elektrisch isolierende Dichtbahn aufgesetzt ist.

Die mobile Dichtbahn-Kontaktplatte kann so auf der Dichtbahn aufgesetzt werden, dass damit ein Leck schnell und genau mit einem zur Ausübung des Verfahrens verwendeten Messgerät mit zwei Messfühlern geortet wird, die an schrittweise ausgewählten Positionen bezüglich der Dichtbahn-Kontaktplatte die Oberseite des Flachdachs abtasten können, um durch Interpretation des Messergebnisses, beispielsweise eines Zeigerausschlags, eine Annäherung an das gesuchte Leck zu ermöglichen. Die Auswahl der Abtaststellen erfolgt durch die Bedienungsperson, die den durch das Messgerät fließenden Strom erfasst, dessen Stärke und Richtung sinnfällig mit dem Messgerät angezeigt werden können.

Eine zur Ausübung des voranstehenden Verfahrens vorgesehene Leckprüf- und Leckortungsanordnung ist in Anspruch 12 angegeben. Auf deren vorteilhafte Ausgestaltungen sind die Ansprüche 13 - 21 gerichtet.

Zur genauen Leckortung wird gemäß Anspruch 11 vorgeschlagen, dass mit der Spannungsquelle einerseits mindestens zwei mobile Dichtbahn-Kontaktplatten verbunden werden, und andererseits die Metallgitterbahn elektrisch verbunden wird, und dass die mobilen Dichtbahn-Kontaktplatten an zueinander entfernten Stellen auf dem Flachdach aufgestellt werden. - Damit ist die Wahrscheinlichkeit erhöht, dass sich eine Leckstelle in der Nähe einer der Dichtbahn-Kontaktplatten befindet, wo ein verhältnismäßig großer Spannungsabfall entsteht, der eine schnelle und exakte Leckortung der Leckstelle mit den beiden Messfühlern ermöglicht. Auf die entsprechende Anordnung ist Anspruch 21 gerichtet.

Die Verwendung der mobilen Dichtbahn-Kontaktplatten ist besonders dann vorteilhaft, wenn sich auf dem Flachdach eine Begrünung, Bekiesung oder Platten oder eine sonstige Auflast befinden, die die Installation einer Ringleitung erschwert. Auch könnte die Ringleitung durch Sturm oder durch begehende Personen beschädigt werden. - Hingegen kann bei dem temporären Einsatz der mobilen Dichtbahn-Kontaktplatten nur zur Leckprüfung und/oder - Leckortung der vorangehende Nachteil vermieden werden. Außerdem kann, wie oben erwähnt, mit den mobilen Dichtbahn-Kontaktplatten ein erkanntes Leck, welches noch nicht exakt lokalisiert ist, schneller aufgefunden werden, indem die zu untersuchende Fläche mit den mobilen Dichtbahn-Kontaktplatten eingegrenzt wird.

Die Dichtbahn-Kontaktplatten oder Ringleitung bestehen zweckmäßig aus einem korrosionsbeständigen leitfähigen Material, insbesondere Nirosta- oder verzinkten Kupfermaterial.

Durch elektrische Isolierung soll die Bahn aus elektrisch leitfähigem Material bzw. Metallgitterbahn normalerweise gegenüber der Hauserde isoliert sein. Die Bahn aus elektrisch leitfähigem Material bzw. Metallgitterbahn soll insbesondere während der Leckprüfung und Leckortung nicht geerdet sein, damit ein definierter Stromkreis erzeugt wird. Auf den Sonderfall einer zeitweiligen Erdung wird weiter unten eingegangen.

Vorzugsweise ist zum einfachen Verlegen die Bahn aus elektrisch leitfähigem Material bzw. Metallgitterbahn mit der isolierenden Dichtbahn fest verbunden, so dass ein einziger Verlegevorgang für die Dichtbahn und die Bahn aus elektrisch leitfähigem Material bzw. Metallgitterbahn genügt, wonach sich die Metallgitterbahn unter der Dichtbahn befindet.

Gemäß Anspruch 7 kann jedoch auch mindestens eine Bahn aus elektrisch leitfähigem Material bzw. Metallgitterbahn verwendet werden, die sich unmittelbar zwischen einer oberen isolierenden Dichtbahn und einer unteren isolierenden Schicht im Flachdachaufbau befinden. Auch in diesem Falle sind die Bahnen, nämlich die obere Dichtbahn und die untere isolierende Schicht, zwischen denen die Bahn aus elektrisch leitfähigem Material bzw. Metallgitterbahn liegt, vorteilhaft zu einer Einheit verbunden. Auf eine entsprechende Leckprüf- und Ortungsanordnung unter Einschluss der Metallgitterbahn ist Anspruch 17 gerichtet.

Die Verbindung kann besonders vorteilhaft für zwei bituminöse Schichten als Dichtbahnen dadurch erfolgen, dass die beiden bituminösen Schichten durch die Metallgitterbahn hindurch miteinander verbunden sind bzw. mit der unteren isolierenden Schicht verbunden sind, indem durch Erhitzen der bituminösen Schichten fließfähiger Bitumen durch die Metallgitterbahn hindurchdringt und durch anschließendes Abkühlen verfestigt. Dies trifft auch für kaltselbstklebende Systeme zu. Auf die Verwendung einer solchen verbundenen Metallgitterbahn ist Anspruch 8 gerichtet bzw. auf die entsprechende Anordnung Anspruch 18.

Analog dazu können die Bahnen aus elektrisch leitfähigem Material nach Anspruch 9 verwendet werden, die unter zwei bituminösen Schichten angeordnet sind, die durch Erhitzen und anschließendes Abkühlen direkt miteinander bzw. der unteren isolierenden Schicht verbunden sind. Auf die entsprechende Anordnung ist Anspruch 19 gerichtet.

Generell kann durch die Anordnung mindestens einer Bahn aus elektrisch leitfähigem Material bzw. Metallgitterbahn zwischen den beiden isolierenden Dichtbahnen nicht nur die Sicherheit der Abdichtung des Flachdachs erhöht werden, sondern eine beschädigte obere Dichtbahn kann bereits erkannt werden und deren Leckstelle kann geortet werden, auch wenn die untere Dichtbahn noch intakt ist. Somit kann vermieden werden, dass bei einer undichten oberen Dichtbahn, beispielsweise im Bereich einer Schweißnaht, zwischen die beiden Bahnen eindringendes Wasser zu einer schnelleren Alterung der Dichtanordnung führt.

Bei allen oben besprochenen Anordnungen der Bahnen aus elektrisch leitfähigem Material bzw. Metallgitterbahnen in Bezug auf die isolierende Dichtbahn ist es möglich, gemäß Anspruch 4 mehrere solche einander in einem Überlappungsbereich überlappende und dadurch miteinander kontaktierte Bahnen zu verwenden, was den Vorteig hat, dass die einzelnen Bahnen aus elektrisch leitfähigem Material bzw. Metallgitterbahnen handlicher sein könnten

Um die ordnungsgemäße Überlappung und damit Kontaktierung vor einer Leckprüfung und Leckortung nach Anspruch 4 zu überprüfen, wird der Überlappungsbereich der Bahnen aus elektrisch leitfähigem Material in einen elektrischen Kontrollstromkreis eingeschlossen, der alternativ statt der Spannungsquelle für die Abtastung der Oberseite des Flachdachs aktiviert werden kann.

Der Kontrollstromkreis ist ein Widerstandsmesskreis mit einem Widerstandsmessgerät, welches an zueinander entfernte Stellen der überlappten Bahnen aus elektrisch leitfähigem Material unter Einschluss des Überlappungsbereichs angeschlossen werden kann, und zwar insbesondere an den Kontaktplatten, die auch zur eigentlichen Leckprüfung und Leckortung an den Bahnen aus elektrisch leitfähigem Material verwendet werden, oder aber an externen Anschlüssen, über die die Bahnen aus elektrisch leitfähigem Material an die Spannungsquelle zur Leckprüfung und Leckortung angeschlossen ist, wobei die Spannungsquelle während der Aktivierung des Kontrollstromkreises ausgeschaltet ist bzw. so umgeschaltet ist, dass die Spannungsquelle den Kontrollstromkreis nicht stört.

In der mit dem Kontrollstromkreis erweiterten Leckprüf- und Leckortungsanordnung werden also zwei Funktionen durchgeführt, nämlich die Kontrolle der überlappenden Verlegung der Bahnen aus elektrisch leitfähigem Material bzw. Metallgitterbahnen und anschließend die Dichtigkeitsprüfung und Leckortung.

Mit der Bahn aus elektrisch leitfähigem Material bzw. Metallgitterbahn kann zusätzlich ohne nennenswerte Komplizierung der Anordnung ein Schutz vor hoch- oder niederfrequenter elektromagnetischer Strahlung, auch Elektrosmog genannt, erreicht werden. Hierzu kann diese Bahn gemäß Anspruch 5 alternativ zu ihrer Isolation gegenüber der Hausmasse während der Aktivierung des Kontrollstromkreises oder der eigentlichen Leckprüfung und Leckortung an eine elektrische Erdverbindung angeschlossen werden.

Für die eigentliche Leckprüfung und Leckortung gemäß Anspruch 1 wird eine elektrische Potentialdifferenz durch die eingeschaltete Spannungsquelle zwischen der Oberseite des Flachdachs, die hierzu mit Wasser benetzt ist, und der Bahn aus elektrisch leitfähigem Material bzw. Metallgitterbahn erzeugt.

Als Spannungsquelle kann eine Gleichstromquelle verwendet werden, oder bevorzugt gemäß Anspruch 6 ein Impulsgeber, der unipolare Impulse in Zeitintervallen von drei bis fünf Sekunden erzeugt. Im letzteren Fall wird die Leckprüfung und Leckortung besonders zuverlässig, was dadurch erklärt werden kann, dass Polarisationserscheinungen an Feuchtstellen in dem Flachdach durch dauernd anliegende Spannung gleicher Polarität vermieden werden. Aus dem gleichen Grund kann vorteilhaft die Polung der Spannungsquelle geändert werden und es ist auch möglich, mit einem impulsgeber als Spannungsquelle bipolare Impulse zu erzeugen, wenn das Messgerät zu deren Auswertung eingerichtet ist. Eine entsprechende Leckprüf- und leckortungsanordnung ist in Anspruch 16 angegeben.

Ein Ausführungsbeispiel der zur Ausübung des erfindungsgemäßen Verfahrens verwendeten Leckprüf- und Leckortungsanordnung wird im folgenden anhand einer Zeichnung mit einer Figur erläutert, woraus sich Merkmale der Erfindung konkretisieren können.

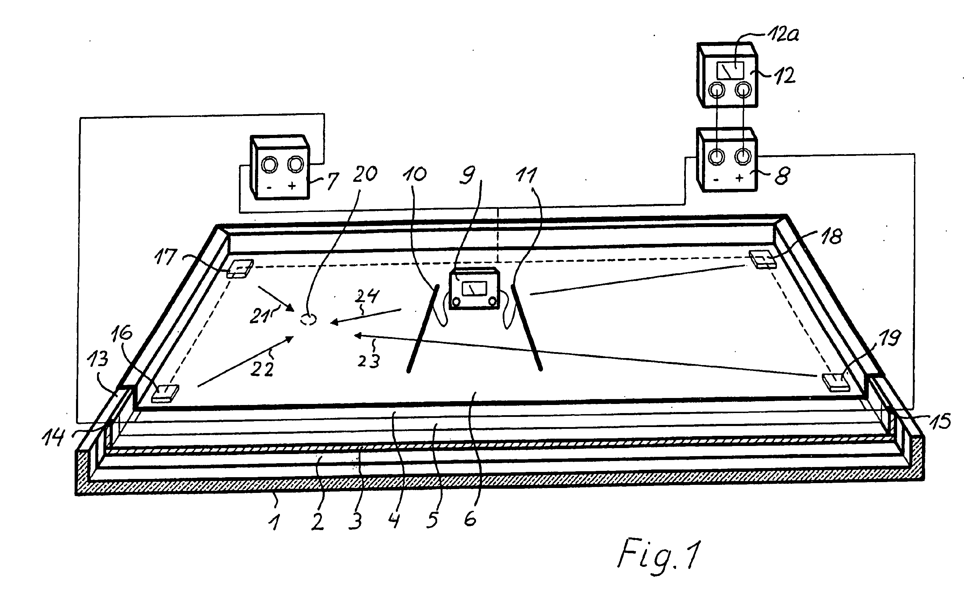

In Figur 1 ist eine Leckprüf- und Leckortungsanordnung schematisch in einer schaubildlichen Ansicht dargestellt.

In Figur 1 ist mit 1 eine Betondecke eines Flachdachs bezeichnet, über der eine Dampfsperre 2 und eine Dämmung 3 bzw. Dämmstoff angeordnet sind. Darüber befindet sich eine Metallgitterbahn 5 und über dieser, durch ein Trennvlies 4 getrennt und isoliert, eine elektrisch isolierte Dichtbahn 6, welche die Oberseite des Flachdachs bildet. Das Vlies dient zum Schutz einer oder mehrerer Kunststoffbahnen, welche die isolierte Dichtbahn bilden können, vor mechanischen Beschädigungen durch die Metallgitterbahn. Die Dichtbahn 6 kann eine Kunststoffbahn sein, aber auch eine bituminöse Schicht. Die Metallgitterbahn 5 kann als solche ausgelegt sein, aber auch werkmäßig mit der Dichtbahn, insbesondere bei deren Ausführung als bituminöse Schicht, verbunden sein, um mit dieser verlegt zu werden. Die Verlegung der Metallgitterbahn erfolgt so, dass keine Verbindung zur Hauserde eintritt, indem ein isolierender Abstand zu Metallkörpern eingehalten wird, die mit der Hausmasse verbunden sind. Beispielsweise ist die Metallgitterbahn etwa 10 cm um einen Gully herum ausgespart, was in Figur 1 nicht dargestellt Ist.

Die Metallgitterbahn ist selbst nicht brennbar und insofern brandschutztechnisch beispielsweise gegenüber eine PE-Folie oder einem PP-Vlies vorteilhaft.

Bei Verbindung der Metallgitterbahn mit einer bituminösen Bahn als Dichtbahn 6 und dem Dämmaterial wird eine besonders gute Windsogsicherung der Abdichtung gewährleistet.

Gerätetechnisch gehört zu der Leckprüf- und Leckortungsanordnung eine Spannungsquelle 12, die im wesentlichen aus einem Impulsgeber besteht und mit zwei Anschlussboxen 7, 8 verbunden ist. Ferner ist ein mobiles Messgerät vorgesehen, welches als empfindliches Strom- oder Spannungsmessgerät mit beidseitigem Nadelausschlag ausgeführt ist und welches mit zwei beweglichen Messfühlern 10 und 11 verbunden ist, mit denen die Oberfläche des Flachdachs abgetastet werden kann.

In dem vorliegenden Ausführungsbeispiel ist je ein Pluspol der Spannungsquelle 12 über die Anschlussboxen mit der Metallgitterbahn elektrisch fest verbunden, und zwar mit entgegengesetzten Enden der Metallgitterbahn, die aus mehreren kleineren Metallgitterbahnen mit zu einer Attikakante 13 parallelen Überlappungsbereichen, in denen sich die kleineren Metallgitterbahnen einander kontaktierend überlappen, zusammengesetzt sein kann.

Zur Überprüfung der ordnungsgemäßen Verlegung der derart zusammengesetzten Metallgitterbahn, und insbesondere deren Überlappungsbereiche, kann ein nicht dargestelltes Widerstandsmessgerät mit den einander entgegengesetzten Kontaktierungsstellen der zusammengesetzten Metallgitterbahn 5 verbunden sein.

Die Kontaktierungsstellen 14, 15 können durch nicht dargestellte Kontaktplatten realisiert sein, die jeweils mit einer der äußeren Metallgitterbahnen der zusammengesetzten Metallgitterbahn fest verbunden sind.

Zur Verwendung bei der eigentlichen Leckprüfung und Leckortung sind aus der Zeichnung vier mobile Dichtbahnkontaktplatten 16 bis 19 ersichtlich, die voneinander entfernt im Bereich der äußeren Ecken der Betondecke aufgesetzt sind, aber im Bedarfsfall auch an anderer Stelle im Zuge einer Einkreisung einer Undichtigkeitsstelle 20 versetzt werden können, was mit den Pfeilen 21 bis 24 angedeutet ist. Alternativ kann hierzu auch eine Ringleitung verwendet werden.

Nach Aufbau der dargestellten Leckprüf- und Leckortungsanordnung wird mit dieser das Verfahren zur Leckprüfung und Leckortung wie folgt ausgeübt:
Vor einer Leckprüfung und Leckortung wird ggf. überprüft, ob die zusammengesetzte Metallgitterbahn ordnungsgemäß verlegt ist, d.h. kleinere Metallgitterbahnen, die überlappend die Metallgitterbahn 5 bilden, kontaktierend überlappt sind, was an den Kontaktierungsstellen 14 und 15 erfolgen kann, die in einen nicht dargestellten Kontrollstromkreis zur Widerstandsmessung eingeschlossen sind.

Danach wird das Flachdach auf dessen Oberfläche, d.h. auf der Dichtbahn 6 befeuchtet und die Leckprüfung und Leckortung kann durch Einschalten der Spannungsquelle 12 beginnen.

Wenn nach dem Einschalten der Spannungsquelle 12 ein signifikanter Strom fließt, der mit dem Amperemeter 12a angezeigt wird, deutet dies auf ein vorhandenes Leck hin. Anschließend kann mit dem portablen Messgerät 9 durch Abtasten der Oberseite des Flachdachs mit den Messfühlern 10 und 11 die Undichtigkeitsstelle 20 lokalisiert werden. Hierzu sind zweckmäßig zunächst die Dichtbahn-Kontaktplatten im Randbereich des Flachdachs aufgesetzt. Sie können dann näher an das Messgerät 9 bzw- die Undichtigkeitsstelle 20, deren genaue Lage zu ermitteln ist, herangeführt werden, wodurch der zu untersuchende Bereich des Flachdachs eingegrenzt wird, bis die Leckstelle durch Maximalanzeige des Messgeräts gefunden ist.

Hierbei ist vorteilhaft, dass der elektrische Widerstand in dem Schaltkreis, in dem die Spannungsquelle 12 angeordnet ist, wegen der Metallgitterbahn sehr niedrig ist. Die Metallgitterbahn kann korrosionsbeständig ausgeführt werden, wodurch auch bei einer zusammengesetzten Metallgitterbahn im Laufe der Zeit keine nennenswerte Erhöhung des Widerstands eintritt. Die Metallgitterbahn ist leicht verlegbar insbesondere dann, wenn sie bereits ab Werk an der Dichtbahn angebracht ist bzw. in dieser integriert ist. Dies ermöglicht einen kostengünstigen Aufbau des Flachdachs mit Leckprüf- und Leckortungsanordnung.

### Bezugszahlenliste

- 1: Betondecke
- 2: Dampfsperre
- 3: Dämmung
- 4: Trennvlies
- 5: Metallgitterbahn
- 6: Dichtbahn
- 7: Anschlussbox
- 8: Anschlussbox
- 9: Messgerät
- 10: Messfühler
- 11: Messfühler
- 12: Spannungsquelle mit
- 12a: Amperemeter
- 13: Attikakante
- 14: Kontaktierungsstelle
- 15: Kontaktierungsstelle
- 16: Dichtbahn-Kontaktplatte
- 17: Dichtbahn-Kontaktplatte
- 18: Dichtbahn-Kontaktplatte
- 19: Dichtbahn-Kontaktplatte
- 20: Undichtigkeitsstelle
- 21: Pfeil
- 22: Pfeil
- 23: Pfeil
- 24: Pfeil

## Patentansprüche

1. Verfahren zur Leckprüfung und -ortung von Flachdächern oder dergleichen, die mit mindestens einer elektrisch isolierenden Dichtbahn (6) abgedichtet sind, wobei mindestens eine Spannungsquelle (12) mit einem Pol an einer Oberseite der Dichtbahn (6) angelegt wird und wobei anschließend mit einem Messgerät (9) mit zwei Messfühlern (10, 11) die Oberseite der Dichtbahn (6) abgetastet wird,
**dadurch gekennzeichnet,**
**dass** das Verfahren bei einer Dichtbahn (6) verwendet wird, deren Unterseite mit elektrisch leitfähigem Material ausgestattet ist, das als wenigstens eine Metallgitterbahn ausgebildet ist und das an einen anderen Pol der Spannungsquelle (12) angeschlossen wird, bevor die Oberseite der Dichtbahn (6) mit den Messfühlern (10, 11) abgetastet wird.

2. Verfahren nach Anspruch 1,
**dadurch gekennzeichnet,**
**dass** wenigstens eine, an den einen Pol der Spannungsquelle (12) angeschlossene mobile Dichtbahn-Kontaktplatte (16-19) auf die elektrisch isolierende Dichtbahn (6) vor deren Abtastung mit den Messfühlern (10, 11) aufgesetzt wird.

3. Verfahren nach Anspruch 1,
**dadurch gekennzeichnet,**
**dass** vor der Abtastung der Oberseite der Dichtbahn (6) der eine Pol der Spannungsquelle (12) an eine Ringleitung auf der Dichtbahn (6) angeschlossen wird.

4. Verfahren nach wenigstens einem der Ansprüche 1 bis 3,
**dadurch gekennzeichnet,**
**dass** wenigstens zwei in einem Überlappungsbereich miteinander kontaktierte Metallgitterbahnen (5) unter der Dichtbahn (6) verwendet werden, die an einen als Widerstandsmesskreis ausgebildeten elektrischen Kontrollstromkreis unter Einschluss des Überlappungsbereichs angeschlossen werden, wonach der Kontrollstromkreis an den Metallgitterbahnen (5) alternativ zu der Spannungsquelle (12) für die Abtastung der Oberseite des Flachdachs aktiviert wird.

5. Verfahren nach wenigstens einem der vorangehenden Ansprüche,
**dadurch gekennzeichnet,**
**dass** die wenigstens eine Metallgitterbahn (5) alternativ an eine elektrische Erdverbindung angeschlossen wird.

6. Verfahren nach wenigstens einem der vorangehenden Ansprüche,
**gekennzeichnet durch**
Verwendung eines Impulsgebers als Spannungsquelle (12).

7. Verfahren nach wenigstens einem der vorangehenden Ansprüche,
**gekennzeichnet durch**
Verwendung von Metallgitterbahn(en) (5) zwischen der oberen elektrisch isolierenden Dichtbahn (6) und einer unteren isolierenden Schicht im Flachdachaufbau.

8. Verfahren nach Anspruch 7,
**gekennzeichnet durch**
Verwendung einer Metallgitterbahn (5) bzw. Metallgitterbahnen zwischen zwei bituminösen Schichten, die **durch** Erhitzen **durch** die Metallgitterbahn/-bahnen hindurch miteinander bzw. mit der unteren isolierenden Schicht verbunden sind.

9. Verfahren nach wenigstens einem der vorangehenden Ansprüche 7 und 8,
**gekennzeichnet durch**
Verwendung von Metallgitterbahn(en) (5) unter zwei bituminösen Schichten, die **durch** Erhitzen miteinander bzw. mit der unteren isolierenden Schicht verbunden sind.

10. Verfahren nach wenigstens einem der vorangehenden Ansprüche,
**gekennzeichnet durch**
Verwendung einer Metallgitterbahn (5) aus einem korrosionsbeständigen leitfähigen Material.

11. Verfahren nach wenigstens einem der vorangehenden Ansprüche,
**dadurch gekennzeichnet,**
**dass** die Spannungsquelle (12) einerseits mit wenigstens zwei mobilen Dichtbahn-Kontaktplatten (16-19) elektrisch verbunden wird und andererseits mit der Metallgitterbahn (5) elektrisch verbunden wird, und dass die mobilen Dichtbahn-Kontaktplatten (16-19) an zueinander entfernten Stellen auf dem Flachdach aufgestellt werden.

12. Leckprüf- und Leckortungsanordnung zur Leckprüfung und -ortung umfassend ein Flachdach oder dergleichen, das mit mindestens einer elektrisch isolierenden Dichtbahn (6) abgedichtet ist, mindestens eine Spannungsquelle (12), deren einer Pol mit der Oberseite der Dichtbahn (6) in elektrischer Verbindung steht, sowie ein Messgerät (9) mit zwei Messfühlern (10, 11), die zur Abtastung der Oberseite der Dichtbahn (6) geeignet sind,
**dadurch gekennzeichnet,**
**dass** die Unterseite der Dichtbahn (6) mit elektrisch leitfähigem Material ausgestattet ist, das als wenigstens eine Metallgitterbahn (5) ausgebildet ist und das mit dem anderen Pol der Spannungsquelle (12) elektrisch verbunden ist.

13. Leckprüf- und Leckortungsanordnung nach Anspruch 12,
**dadurch gekennzeichnet,**
**dass** der eine Pol der Spannungsquelle (12) mit wenigstens einer mobilen Dichtbahn-Kontaktplatte (16-19) elektrisch verbunden ist, die auf die elektrisch isolierende Dichtbahn (6) aufgesetzt ist.

14. Leckprüf- und Leckortungsanordnung nach Anspruch 12 oder 13,
**dadurch gekennzeichnet,**
**dass** der eine Pol der Spannungsquelle (12) mit einer Ringleitung auf der Dichtbahn (6) elektrisch verbunden ist.

15. Leckprüf- und Leckortungsanordnung nach wenigstens einem der Ansprüche 12 bis 14,
**dadurch gekennzeichnet,**
**dass** wenigstens zwei in einem Überlappungsbereich miteinander kontaktierte Bahnen aus elektrisch leitfähigem Material bzw. Metallgitterbahnen (5) unter der Dichtbahn (6) angeordnet sind.

16. Leckprüf- und Leckortungsanordnung nach wenigstens einem der Ansprüche 13 - 16,
**gekennzeichnet durch**
einen Impulsgeber als Spannungsquelle (12).

17. Leckprüf- und Leckortungsanordnung nach wenigstens einem der Ansprüche 12 - 16,
**dadurch gekennzeichnet,**
**dass** die Bahn(en) aus elektrisch leitfähigem Material bzw. Metallgitterbahn(en) (5) zwischen der oberen elektrisch isolierenden Dichtbahn (6) und einer unteren isolierenden Schicht im Flachdachaufbau liegt bzw. liegen.

18. Leckprüf- und Leckortungsanordnung nach wenigstens einem der Ansprüche 12 - 17,
**dadurch gekennzeichnet,**
**dass** die Metallgitterbahn (5) bzw. Metallgitterbahnen zwischen zwei bituminösen Schichten angeordnet ist bzw. sind, die durch Erhitzen durch die Metallgitterbahn/-bahnen hindurch miteinander bzw, mit der unteren isolierenden Schicht verbunden sind.

19. Leckprüf und Leckortungsanordnung nach wenigstens einem der Ansprüche 12 - 17,
**dadurch gekennzeichnet,**
**dass** die Bahn(en) aus elektrisch leitfähigem Material bzw. Metallgitterbahn(en) unter zwei bituminösen Schichten angeordnet ist bzw. sind, die durch Erhitzen miteinander bzw. mit der unteren isolierenden Schicht verbunden sind.

20. Leckprüf- und Leckortungsanordnung nach wenigstens einem der Ansprüche 12 - 19,
**dadurch gekennzeichnet,**
**dass** die Bahn aus elektrisch leitfähigern Material bzw. Metallgitterbahn (5) aus einem korrosionsbeständigen leitfähigen Material besteht.

21. Leckprüf- und Leckortungsanordnung nach wenigstens einem der Ansprüche 12 - 20,
**dadurch gekennzeichnet,**
**dass** der eine Pol der Spannungsquelle (12) mit wenigstens zwei mobilen Dichtbahn-Kontaktplatten (16-19) elektrisch verbunden ist, die an zueinander entfernten Stellen auf dem Flachdach angeordnet sind.

## Claims

1. Process for leak testing and leak localization for flat roofs or the like sealed by at least one electrically insulating sealing sheet (6) wherein at least one voltage source (12) is applied via one terminal to one upper side of the sealing sheet (6) and wherein subsequently the upper side of the sealing sheet (6) is scanned by means of a measuring device (9) having two measuring sensors (10, 11)
**characterized in**
**that** the process is employed in application of a sealing sheet (6) the underside of which is provided with electrically conductive material which is formed as at least one metal grid course and which is connected to another terminal of the voltage source before the upper side of the sealing sheet (6) is scanned by the measuring sensors (10, 11)

2. Process according to claim 1,
**characterized in**
**that** at least one mobile sealing sheet contact plate (16 - 19) connected to the one terminal of the voltage source (12) is mounted onto the electrically insulating sealing sheet (6) prior to the scanning thereof by the measuring sensors (10, 11).

3. Process according to claim 1,
**characterized in**
**that** prior to the scanning of the upper side of the sealing sheet (6) the one terminal of the voltage source (12) is connected to a ring main system provided on the sealing sheet (6).

4. Process according to at least one of claims 1 through 3,
**characterized in**
**that** at least two metal grid courses (5) in contact with one another in an overlapping region are employed below the sealing sheet (6) which are connected to an electric test circuit formed as a resistance measuring circuit and including the overlapping region, after which the test circuit on the metal grid courses is activated alternatively relative to the voltage source (12) for scanning the upper side of the flat roof.

5. Process according to at least one of the foregoing claims,
**characterized in**
**that** the at least one metal grid course (5) is alternatively connected to an electric ground connection.

6. Process according to at least one of the foregoing claims,
**characterized by**
the use of a pulse generator as the voltage source (12).

7. Process according to at least one of the foregoing claims,
**characterized by**
the use of metal grid course(s) (5) between the upper electrically insulating sealing sheet (6) and a lower insulating layer of the flat roof structure.

8. Process according to claim 7,
**characterized by**
the use of a metal grid course (5), or metal grid courses, between two bituminous layers which, by heat passing through the metal grid strip, or strips, are connected with one another or with the lower insulating layer, respectively.

9. Process according to at least one of the foregoing claims 7 and 8,
**characterized by**
the use of metal grid course(s) (5) below two bituminous layers connected by heating with one another or with the lower insulating layer, respectively.

10. Process according to at least one of the forgoing claims,
**characterized by**
the use of a metal grid course (5) of a corrosion resistant conductive material.

11. Process according to at least one of the foregoing claims,
**characterized in**
**that** the voltage source (12) is electrically connected, on one hand, with at least two mobile sealing sheet contact plates (16-19) and are electrically connected, on the other hand, with the metal grid course (5), and that the mobile sealing sheet contact plates (16 - 19) are mounted on locations remote relative to each other on the flat roof.

12. Leak testing and leak localization arrangement for leak testing and leak localization comprising a flat roof or the like sealed by at least one electrically insulating sealing sheet (6), at least one voltage source (12) the one terminal of which is in electrical connection with the upper side of the sealing sheet (6), and a measuring device (9) having two measuring sensors (10, 11) suited for scanning the upper side of the sealing sheet (6),
**characterized in**
**that** the underside of the sealing sheet (6) is provided with electrically conductive material shaped as at least one metal grid course (5) and electrically connected with the other terminal of the voltage source (12).

13. Leak testing and leak localization arrangement according to claim 12,
**characterized in**
**that** the one terminal of the voltage source (12) is electrically connected with at least one mobile sealing sheet contact plate (16 - 19) mounted onto the electrically insulating sealing sheet (6).

14. Leak testing and leak localization arrangement according to claim 12 or 13,
**characterized in**
**that** the one terminal of the voltage source (12) is electrically connected with a ring main system on the sealing sheet (6).

15. Leak testing and leak localization arrangement according to at least one of claims 12 through 14,
**characterized in**
**that** at least two sheets of electrically conductive material or metal grid courses (5) in contact with one another in an overlapping region are arranged below the sealing sheet (6).

16. Leak testing and leak localization arrangement according to at least one of claims 13 through 15,
**characterized by**
a pulse generator as the voltage source (12).

17. Leak testing and leak localization arrangement according to at least one of claims 12 through 16,
**characterized in**
**that** the sheet(s) of electrically conductive material, or metal grid course(s) (5) is, or are, provided between the upper electrically insulating sealing sheet (6) and a lower insulating layer of the flat roof structure.

18. Leak testing and leak localization arrangement according to at least one of claims 12 through 17,
**characterized in**
**that** the metal grid course (5), or the metal grid courses, is or are, arranged between two bituminous layers connected with one another or with the lower insulating layer by heat passing through the metal grid course, or courses,

19. Leak testing and leak localization arrangement according to at least one of claims 12 through 17,
**characterized in**
**that** the sheet(s) of electrically conductive material, or metal grid course(s) is, or are, arranged below two bituminous layers which are connected by heating with one another or with the lower insulating layer.

20. Leak testing and leak localization arrangement according to at least one of claims 12 through 19,
**characterized in**
**that** the sheet consists of electrically conductive material, or the metal grid course (6) of a corrosion resistant conductive material, respectively.

21. Leak testing and leak localization arrangement according to at least one of claims 12 through 20,
**characterized in**
**that** the one terminal of the voltage source (12) is electrically connected with at least two mobile sealing sheet contact plates (16 - 19) mounted at locations remote relative to each other on the flat roof.

## Revendications

1. Procédé de détection et de localisation de fuites sur des toits plats ou analogues qui sont étanchéifiés à l'aide d'au moins une membrane d'étanchéité (6) électriquement isolante, dans lequel au moins une source de tension (12) est appliquée par un pôle sur une face supérieure de la membrane d'étanchéité (6) et dans lequel la face supérieure de la membrane d'étanchéité (6) est ensuite explorée à l'aide d'un appareil de mesure (9) équipé de deux capteurs de mesure (10, 11),
**caractérisé en ce que**
le procédé est utilisé dans le cas d'une membrane d'étanchéité (6) dont la face inférieure est pourvue d'un matériau électriquement conducteur qui est réalisé sous la forme d'au moins une membrane en treillis métallique et qui est connecté à un autre pôle de la source de tension (12) avant l'exploration de la face supérieure de la membrane d'étanchéité (6) au moyen des capteurs de mesure (10, 11).

2. Procédé selon la revendication 1,
**caractérisé en ce qu'**au moins une plaque de contact de membrane d'étanchéité mobiles (16-19) connectée audit un pôle de la source de tension (12) est placée sur la membrane d'étanchéité (6) électriquement isolante avant l'exploration de celle-ci au moyen des capteurs de mesure (10, 10).

3. Procédé selon la revendication 1,
**caractérisé en ce qu'**avant l'exploration de la face supérieure de la membrane d'étanchéité (6), ledit un pôle de la source de tension (12) est connecté à une boucle sur la membrane d'étanchéité (6).

4. Procédé selon au moins l'une des revendications 1 à 3,
**caractérisé en ce qu'**on utilise au moins deux membranes en treillis métallique (5) mises en contact mutuellement dans une zone de chevauchement sous la membrane d'étanchéité (6), qui sont connectées à un circuit électrique de contrôle conçu en tant que circuit de mesure de résistance en incluant la zone de chevauchement, après quoi le circuit électrique de contrôle au niveau des membranes en treillis métallique (5) est en variante activé plutôt que la source de tension (12) pour l'exploration de la face supérieure du toit plat.

5. Procédé selon au moins l'une des revendications précédentes,
**caractérisé en ce que**
ladite au moins une membrane en treillis métallique (5) est reliée en variante à une connexion de terre électrique.

6. Procédé selon au moins l'une des revendications précédentes,
**caractérisé par**
l'utilisation d'un générateur d'impulsions en tant que source de tension (12).

7. Procédé selon au moins l'une des revendications précédentes,
**caractérisé par**
l'utilisation de membranes en treillis métallique (5) entre la membrane d'étanchéité (6) supérieure électriquement isolante et une couche inférieure isolante dans la structure de toit plat.

8. Procédé selon la revendication 7,
**caractérisé par**
l'utilisation d'une membrane en treillis métallique (5) ou de membranes en treillis métallique entre deux couches bitumineuses qui sont reliées entre elles ou avec la couche isolante inférieure par chauffage au travers de la/des membrane(s) en treillis métallique.

9. Procédé selon au moins l'une des revendications précédentes 7 et 8,
**caractérisé par**
l'utilisation d'une membrane ou de membrane(s) en treillis métallique (5) sous deux couches bitumineuses, qui sont reliées entre elles ou avec la couche isolante inférieure par chauffage.

10. Procédé selon au moins l'une des revendications précédentes,
**caractérisé par**
l'utilisation d'une membrane en treillis métallique (5) en matériau conducteur résistant à la corrosion.

11. Procédé selon au moins l'une des revendications précédentes,
**caractérisé en ce que**
la source de tension (12) est reliée électriquement d'une part à au moins deux plaques de contact de membrane d'étanchéité mobiles (16-19) et d'autre part à la membrane en treillis métallique (5), et **en ce que** les plaques de contact de membrane d'étanchéité mobiles (16-19) sont installées sur le toit plat à des emplacements situés à distance les uns des autres.

12. Dispositif de détection et de localisation de fuites, comprenant un toit plat ou analogue qui est étanchéifié à l'aide d'au moins une membrane d'étanchéité (6) électriquement isolante, au moins une source de tension (12) dont un pôle est relié électriquement à la face supérieure de la membrane d'étanchéité (6) ainsi qu'un appareil de mesure (9) équipé de deux capteurs de mesure (10, 11) conçus pour explorer la face supérieure de la membrane d'étanchéité (6),
**caractérisé en ce que** la face inférieure de la membrane d'étanchéité (6) est pourvue d'un matériau électriquement conducteur qui est réalisé sous la forme d'au moins une membrane en treillis métallique (5) et qui est relié électriquement à l'autre pôle de la source de tension (12).

13. Dispositif de détection et de localisation de fuites selon la revendication 12,
**caractérisé en ce que** ledit un pôle de la source de tension (12) est relié électriquement à au moins une plaque de contact de membrane d'étanchéité mobile (16-19) qui est placée sur la membrane d'étanchéité (6) électriquement isolante.

14. Dispositif de détection et de localisation de fuites selon la revendication 12 ou 13,
**caractérisé en ce que** ledit un pôle de la source de tension (12) est relié électriquement à une boucle sur la membrane d'étanchéité (6).

15. Dispositif de détection et de localisation de fuites selon au moins l'une des revendications 12 à 14,
**caractérisé en ce qu'**au moins deux membranes en matériau électriquement conducteur ou membranes en treillis métallique mises en contact mutuellement dans une zone de chevauchement sont disposées sous la membrane d'étanchéité (6).

16. Dispositif de détection et de localisation de fuites selon au moins l'une des revendications 13 à 16,
**caractérisé par**
un générateur d'impulsions en tant que source de tension (12).

17. Dispositif de détection et de localisation de fuites selon au moins l'une des revendications 12 à 16,
**caractérisé en ce que**
la/les membrane(s) en matériau électriquement conducteur ou la/les membrane(s) en treillis métallique (5) est/sont située(s) entre la membrane d'étanchéité (6) électriquement isolante supérieure et une couche isolante inférieure dans la structure de toit plat.

18. Dispositif de détection et de localisation de fuites selon au moins l'une des revendications 12 à 17,
**caractérisé en ce que** la membrane en treillis métallique (5) ou les membranes en treillis métallique est/sont disposée(s) entre deux couches bitumineuses qui sont reliées entre elles ou avec la couche isolante inférieure par chauffage au travers de la/des membrane(s) en treillis métallique.

19. Dispositif de détection et de localisation de fuites selon au moins l'une des revendications 12 à 17,
**caractérisé en ce que** la/les membrane(s) en matériau électriquement conducteur ou la/les membrane(s) en treillis métallique est/sont disposée(s) sous deux couches bitumineuses, qui sont reliées entre elles ou avec la couche isolante inférieure par chauffage.

20. Dispositif de détection et de localisation de fuites selon au moins l'une des revendications 12 à 19,
**caractérisé en ce que** la membrane en matériau électriquement conducteur ou la membrane en treillis métallique (5) est réalisée dans un matériau conducteur résistant à la corrosion.

21. Dispositif de détection et de localisation de fuites selon au moins l'une des revendications 12 à 20,
**caractérisé en ce que** ledit un pôle de la source de tension (12) est relié électriquement à au moins deux plaques de contact de membrane d'étanchéité mobile (16-19) qui sont disposées sur le toit plat à des emplacements situés à distance les uns des autres.
